# EUROPEAN PATENT SPECIFICATION

(11) **EP 2 869 709 B1**
(45) Date of publication and mention of the grant of the patent: **16.01.2019**
(21) Application number: 13736776.9
(22) Date of filing: 05.07.2013
(51) Int. Cl.: A23C 19/032, A23C 19/068

(54) **METHOD FOR PREPARING CHEESES WITH IMPROVED AROMA**
VERFAHREN ZUR HERSTELLUNG VON KÄSE MIT VERBESSERTEM AROMA
PROCÉDÉ DE PRÉPARATION DE FROMAGES À ARÔME AMÉLIORÉ

(30) Priority: 06.07.2012 EP 12305813
(43) Date of publication of application: 13.05.2015
(73) Proprietor: DuPont Nutrition Biosciences ApS, 1411 Copenhagen K (DK)
(72) Inventor: MANOURY, Elise, F-86100 Chatellerault (FR); LAFFITTE, Véronique, F-86220 Dangé-Saint-Romain (FR)
(86) International application number: PCT/EP2013/001982
(87) International publication number: WO 2014/005718

(56) References cited:
- EP-A1- 2 361 632
- EP-A2- 2 165 608
- WO-A1-2005/074694
- KLARA BATH: "Microbiota of an unpasteurised cellar-stored goat cheese from northern Sweden", AGRICULTURAL AND FOOD SCIENCE, vol. 21, no. 2, 4 June 2012 (2012-06-04), pages 197-203, XP055037023,
- M. S. AMMOR ET AL: "Two Different Tetracycline Resistance Mechanisms, Plasmid-Carried tet(L) and Chromosomally Located Transposon-Associated tet(M), Coexist in Lactobacillus sakei Rits 9", APPLIED AND ENVIRONMENTAL MICROBIOLOGY, vol. 74, no. 5, 11 January 2008 (2008-01-11), pages 1394-1401, XP055037027, ISSN: 0099-2240, DOI: 10.1128/AEM.01463-07
- TIVA KAFILI ET AL: "Microbial characterization of Iranian traditional Lighvan cheese over manufacturing and ripening via culturing and PCR-DGGE analysis: identification and typing of dominant lactobacilli", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, vol. 229, no. 1, 13 February 2009 (2009-02-13), pages 83-92, XP019702948, ISSN: 1438-2385
- FRANCOISE ET AL: "Occurrence and role of lactic acid bacteria in seafood products", FOOD MICROBIOLOGY, ACADEMIC PRESS LTD, LONDON, GB, vol. 27, no. 6, 1 September 2010 (2010-09-01), pages 698-709, XP027110286, ISSN: 0740-0020 [retrieved on 2010-05-25]
- Raffaella Di Cagno ET AL: "Comparison of the microbiological, compositional, biochemical, volatile profile and sensory characteristics of three Italian PDO ewes' milk cheeses", INTERNATIONAL DAIRY JOURNAL, vol. 13, no. 12, 1 January 2003 (2003-01-01), pages 961-972, XP055394886, GB ISSN: 0958-6946, DOI: 10.1016/S0958-6946(03)00145-6
- L. Aquilanti ET AL: "Resident lactic acid bacteria in raw milk Canestrato Pugliese cheese", Letters in Applied Microbiology, vol. 43, no. 2, 25 April 2006 (2006-04-25) , pages 161-167, XP055394891, GB ISSN: 0266-8254, DOI: 10.1111/j.1472-765X.2006.01935.x
- KABAN G ET AL: "Effect of starter culture on growth of Staphylococcus aureus in sucuk", FOOD CONTROL, BUTTERWORTH, LONDON, GB, vol. 17, no. 10, 1 October 2006 (2006-10-01), pages 797-801, XP024961748, ISSN: 0956-7135, DOI: 10.1016/J.FOODCONT.2005.05.003 [retrieved on 2006-10-01]
- ANNELIES ONRAEDT ET AL: "Industrial importance of the genus Brevibacterium", BIOTECHNOLOGY LETTERS, SPRINGER NETHERLANDS, DORDRECHT, vol. 27, no. 8, 1 April 2005 (2005-04-01), pages 527-533, XP019231140, ISSN: 1573-6776, DOI: 10.1007/S10529-005-2878-3

## Description

### Field of the invention

The present invention provides a method for preparing fermented milk products, especially cheeses such as foil-ripened cheeses, with improved aroma.

### Background of the invention

Cheeses can be classified, among other criteria, by the type of ripening step they have been subjected to. One can distinguish smear-ripened cheeses (or smeared cheeses) on the one hand, and foil-ripened cheeses on the other hand.

Smear-ripened cheeses are cheeses that generally have a rind comprising microorganisms involved in the cheese ripening, especially for the cheese flavour, whereas foil-ripened cheeses do not have any rind (no or a limited growth of microorganisms on its surface). Nowadays the foil-ripened cheese segment increases significantly as it presents many advantages compared to smear-ripened cheeses, both for the cheese producers and the final consumers. Indeed, the non-rind technology for producers allows the reduction of cost due to labor intensive smearing technology. It also presents the advantage to increase the yield by losing less water along wrapped ripening and to avoid risks to spoil the cheese during ripening manipulations and also all along the cheese shelf-life. The ripening stages are better mastered with the non-rind technology, enabling producers to get better standardisation and reproducibility of their cheeses productions. For the consumers, the appearance of the cheese is more attractive and convenient (less sticky, easier to handle). This advantage even opens to a worldwide market where the rind of the cheese is no more wanted. But the consumers still want cheeses with typical aromas.

It is well recognized that this current foil-ripened cheese technology deeply suffers from a lack of flavours, such as the sulphur aroma. Usually, the production of sulphur compounds in smear-ripened cheeses occurs mainly via the development of *Brevibacteria* on the surface of the cheese. However, due its strict aerobic growth conditions, it is difficult to use *Brevibacteria* in order to produce flavours in the cheese body.

Therefore, there is an unmet need in the art for methods for obtaining cheese, in particular foil-ripened cheese, having a satisfactory aroma.

### Summary of the invention

The inventors have discovered that strains belonging to the *Lactobacillus sakei* species were able, when inoculated in milk, to produce volatile sulphur compounds during the fermentation and/or ripening step(s) of a process to produce a fermented milk product and therefore to develop sulphur aroma, preferably sulphur egg aroma in the resulting fermented milk product.

The invention relates to the use of at least one strain of *Lactobacillus sakei* for developing sulphur aroma, preferably sulphur egg aroma, in hard or semi-hard cheese, wherein said at least one strain of *Lactobacillus sakei* is inoculated into milk in combination with at least one strain of acidifying lactic acid bacterium.

The invention also relates to a method for making a hard or semi-hard cheese having a sulphur aroma, preferably sulphur egg aroma, comprising the step of inoculating milk with at least one strain of *Lactobacillus sakei,* in combination with at least one strain of acidifying lactic acid bacterium, wherein said at least one strain of *Lactobacillus sakei* is inoculated as a dry, dried, lyophilized or frozen concentrates.

The invention also relates to a hard or semi-hard cheese as defined in the claims.

### Detailed description of the invention

The present application discloses the use of at least one strain of *Lactobacillus sakei* for producing volatile sulphur compounds in fermented milk products.

As used herein, the expression "volatile sulphur compounds" refers to any compounds responsible for a sulphur aroma such as thiols (e.g. hydrogen sulphide, methanethiol...), sulphides (e.g. dimethylsulphide dimethyldisulphide, dimethyltrisulphide, dimethylquadrisulfide...), thioethers (e.g. 2,4-dithiapentane, 3,4-ditiahexane, 2,4,5-trithiahexane, 3(methyl)2,4-dithiapentane...), S-methylthioesters (e.g. s-methylthioacetate, s-methylthiopropionate, s-methylthiobutyrate, s-methylthioisobutyrate, s-methylthioisovalerate, s-methylhexanoate...) and aldehydes (e.g. methional, methylthioacetaldehyde...).

In a particular embodiment, the present application discloses the use of at least one strain of *Lactobacillus sakei* for producing hydrogen sulphide in fermented milk products, preferably in cheeses. In a particular embodiment, the concentration of hydrogen sulphide produced in fermented milk products, wherein at least one strain of *Lactobacillus sakei* is used according to the different embodiments of the invention, is increased of a factor of at least 3, of at least 4, of at least 5, of at least 6, of at least 7, of at least 8, of at least 9, of at least 10 or of at least 15, compared to similar fermented products obtained in the same conditions in the absence of *Lactobacillus sakei.* In a particular embodiment, the concentration of hydrogen sulphide is determined, as described in the examples, at least 2 weeks after that the milk has been inoculated with at least one strain of *Lactobacillus sakei* according to the different embodiments of the invention, under conditions enabling fermentation and ripening.

The invention relates to the use of at least one strain of *Lactobacillus sakei* for developing sulphur aroma, preferably sulphur egg aroma, in hard or semi-hard cheese, wherein said at least one strain of *Lactobacillus sakei* is inoculated into milk in combination with at least one strain of acidifying lactic acid bacterium.

Sulphur egg aroma can be quantified by a sensory assessment test, by a panel of well-trained assessors, using a seven-point scale (from 0 i.e. level of non-perception of the aroma to 6 i.e. level of very high perception of the sulphur aroma).

Typically, the use of at least one strain of *Lactobacillus sakei* enables to develop sulphur aroma with a score of at least 1.1, preferably at least 1.5, even more preferably at least 2, even more preferably at least 2.5, even more preferably at least 3, when measured on a seven-point scale, in fermented milk products

Typically, the use of at least one strain of *Lactobacillus sakei* according to the invention enables to increase the sulphur egg aroma score by at least 3 points, when measured on a seven-point scale, in fermented milk products compared to similar fermented milk products obtained in the absence of *Lactobacillus sakei.*

The application also describes a method for producing volatile sulphur compounds in fermented milk products, comprising the step of inoculating milk with at least one strain of *Lactobacillus sakei.*

The invention also relates to a method for making a hard or semi-hard cheese having a sulphur aroma, preferably a sulphur egg aroma, comprising the step of inoculating milk with at least one strain of *Lactobacillus sakei* in combination with at least one strain of acidifying lactic acid bacterium, wherein said at least one strain of *Lactobacillus sakei* is inoculated as a dry, dried, lyophilized or frozen concentrates.

*Lactobacillus sakei* is a Gram-positive microaerophilic bacterium commonly found living on fresh meat and fish. This bacterium is valuable in the fermentation of meat products and exhibits properties that allow for better preservation and storage of fresh meats and fish. It is the predominant bacteria used for meat fermentation especially in Europe as acidification and/or preservation agents. It has now surprisingly been found that *Lactobacillus sakei* is able to adapt and grow on milk, a medium that is totally different from meat or fish. The bacteria can be used mainly as aromatisation agent, especially to develop sulphur aroma of fermented milk products such as cheeses.

The strain of *Lactobacillus sakei* according to the invention can be any strain of *Lactobacillus sakei.*

In one embodiment, the strain of *Lactobacillus sakei* is selected from the group consisting of:
- *Lactobacillus sakei* strain deposited at the CNCM by Danisco France SAS on 25th April 2007 under the number CNCM 1-3750;
- *Lactobacillus sakei* strain deposited at the CNCM by Rhodia Food SAS on 23rd May 2000 under the number CNCM 1-2479;
and mixtures thereof.

Preferably, the strain of *Lactobacillus sakei* is *Lactobacillus sakei* strain deposited at the CNCM by Danisco France SAS on 25th April 2007 under the number CNCM 1-3750. Typically, the *Lactobacillus sakei* strain is added at a rate of 10⁵ to 10¹² CFU (or colony forming units) per litre of milk, preferably from 10⁵ to 10¹¹ CFU per litre of milk, preferably from 10⁶ to 10¹⁰ CFU per litre of milk, preferably from 10⁷ to 10⁹ CFU per litre of milk, preferably approximately 10⁸ or 10⁹ CFU per litre of milk.

The strain of *Lactobacillus sakei* can be used alone or in combination with other microorganisms.

When used in combination, said other microorganisms are typically selected from bacteria, fungi, molds, yeasts, archaea, protists or any mixture thereof.

In one embodiment, said fungi/molds are selected from *Penicillium spp, Geotrichum spp, Lecanicillium spp*, and *Trichothecium spp.*

In one embodiment, said yeasts are selected from *Kluyveromyces spp, Debaryomyces spp, Yarrowia spp, Pichia spp, Williopsis spp,* and *Saccharomyces spp.*

In a preferred embodiment, said microorganisms are bacteria from any genus or species. Preferred bacteria according to the invention are lactic acid bacteria, *Bacillus, Staphylococcus* such as *Staphylococcus vitulinus,* and coryneform bacteria such as for example *Arthrobacter spp, Corynebacterium spp, Brevibacterium spp* such as *Brevibacterium casei, Brevibacterium linens* or/and *Brevibacterium aurantiacum.*

In a particular embodiment of the invention, the strain of *Lactobacillus sakei* is used in combination with a strain *Staphylococcus* such as *Staphylococcus vitulinus* and/or with a strain *Brevibacterium* such as *Brevibacterium casei, Brevibacterium linens* or/and *Brevibacterium aurantiacum.*

In a particular embodiment the strain of *Lactobacillus sakei* is used in combination with at least a strain of *Staphylococcus vitulinus,* preferably the strain *Staphylococcus vitulinus* deposited at the CNCM by Danisco France SAS on 25th April 2007 under the number CNCM 1-3751. Advantageously, the sulphur aroma developed by these combinations is even greater than the sulphur aroma developed by the strain of *Lactobacillus sakei* alone. Typically, the *Staphylococcus vitulinus* strain, is added at a rate of 10⁵ to 10¹² CFU (or colony forming units) per litre of milk, preferably from 10⁵ to 10¹¹ CFU per litre of milk, preferably from 10⁶ to 10¹⁰ CFU per litre of milk, preferably from 10⁷ to 10⁹ CFU per litre of milk, preferably approximately 10⁸ or 10⁹ CFU per litre of milk.

Therefore, the invention also relates to a bacterial composition comprising at least one strain of *Lactobacillus sakei* and at least one other strain selected from the group consisting of:
- a strain of *Staphylococcus,* such as a strain of *Staphylococcus vitulinus,* preferably the strain *Staphylococcus vitulinus* deposited at the CNCM by Danisco France SAS on 25th April 2007 under the number CNCM 1-3751,
- a strain of *Brevibacterium,* such as a strain *Brevibacterium casei, Brevibacterium linens* or *Brevibacterium aurantiacum.*

In a particular embodiment, the strain of *Lactobacillus sakei* is used in combination with at least one lactic acid bacteria (LAB). In a particular embodiment, the strain of *Lactobacillus sakei,* alone or in combination with at least one strain of *Staphylococcus* and/or at least one strain of *Brevibacterium* as described herein, is used in combination with at least one lactic acid bacteria (LAB). According to the invention, the term "lactic acid bacteria" includes any bacteria capable of producing, as the major metabolic end product of carbohydrate fermentation, lactic acid or at least one of its derivatives (including, but not limited to, propionic acid). The term is therefore intended to include propionic acid bacteria (PAB), which produce propionic acid as a carbohydrate fermentation product. Preferably the bacteria in the present invention are lactic acid bacteria which are generally recognised as safe for animal or human consumption (e.g. bacteria that are GRAS approved, bacteria that are included in the most updated list of QPS microorganisms...).

Suitable lactic acid bacteria may be selected from the genus *Lactococcus, Lactobacillus, Leuconostoc, Bifidobacterium, Carnobacterium, Enterococcus, Propionibacterium, Pediococcus, Streptococcus* and mixtures thereof. Typically, the microorganisms are probiotics or DFM (Direct Fed Microbials). According to the invention "probiotics" or "DFMs" means live microorganisms which when administered in adequate amounts confer a health benefit to the host, the host being a human in the case of probiotics and an animal in the case of DFMs.

These LAB can be selected from the group comprising the following species and their subspecies *Bifidobacterium bifidum, Bifidobacterium animalis (e.g. Bifidobacterium animalis lactis), Bifidobacterium longum, Bifidobacterium breve, Lactobacillus reuteri, Lactobacillus acidophilus, Lactobacillus casei, Lactobacillus plantarum, Lactobacillus delbrueckii (e.g. Lactobacillus delbrueckii bulgaricus), Lactobacillus rhamnosus, Lactococcus lactis, Lactobacillus pentosus, Lactobacillus buchneri, Lactobacillus brevis, Pediococcus pentosaceus, Pediococcus acidilactici, Pediococcus parvulus, Propionibacterium freudenreichii, Propionibacterium jensenii* and *Streptococcus salivarius (e.g. Streptococcus salivarius thermophilus).*

Within the invention, the strain of *Lactobacillus sakei* is used in combination with at least one acidifying lactic acid bacteria. In a particular embodiment of the invention, the strain of *Lactobacillus sakei,* alone or in combination with at least one strain of *Staphylococcus* and/or at least one strain of *Brevibacterium* as described herein, is used in combination with at least one acidifying lactic acid bacteria.

Without wishing to be bound by theory, the inventors believe that, during the fermentation of milk, there exists a symbiosis between acidifying lactic acid bacteria present in the starter culture (whose role is mainly to decrease the pH and/or modifying the protein matrix of the milk) and the *Lactobacillus sakei* (whose role is mainly to increase the development of sulphur aroma).

As used herein, the expression "acidifying lactic acid bacteria" has its general meaning in the art. The acidifying properties of the lactic acid bacteria can be described by the rate of acidification, using the following descriptor calculated by CINAC: Slope between pH6 and pH5 (pH unit/min (pHu/min)). In the test conditions, the fermentation is done in 100 ml of half-skimmed UHT milk (Le Petit Vendéen®) inoculated with the lactic acid bacteria to be tested at a rate of 5 to 10 g/100 1, then incubated at 32°C (in a water bath). The pH is continuously monitored using a CINAC apparatus. Under these operating conditions, it is estimated that this variable is characteristic of the lactic acid bacteria rather than the inoculation rate. Several groups of lactic acid bacteria can be distinguished:
- the lactic acid bacteria with so-called slow acidification, the Slope pH6-pH5 of which is at least 0.0010 pHu/min,
- the lactic acid bacteria with so-called medium acidification, the Slope pH6-pH5 of which is between 0.0050 and 0.0075 pHu/min,
- and the lactic acid bacteria with so-called rapid acidification the Slope pH6-pH5 of which is greater than 0.0075 pHu/min.

The term "acidifying lactic acid bacteria" encompass the lactic acid bacteria of the 3 above mentioned groups (i.e. slow, medium and/or rapid acidifying lactic acid bacteria). The skilled person will be able to choose the desired acidifying lactic acid bacteria depending on the technology.

In a particular embodiment, the strain of *Lactobacillus sakei* is used in combination with at least one acidifying lactic acid bacteria belonging to the *Lactobacillus* genus. Some particular examples are *Lactobacillus acidophilus* strains such as *Lactobacillus acidophilus* deposited at the CNCM (Collection Nationale de Cultures de Microorganismes, Institut Pasteur, 25 rue du Docteur Roux, F-75724 Paris Cedex 15), by Danisco France SAS on 3 July 2007 under the number CNCM 1-3784, or *Lactobacillus paracasei* strains.

In a particular embodiment, the strain of *Lactobacillus sakei* is used in combination with at least one acidifying lactic acid bacteria belonging to the *Lactococcus* genus.

In a particular embodiment, the strain of *Lactobacillus sakei* is used in combination with at least one acidifying lactic acid bacteria belonging to the *Lactococcus lactis* species, preferably *Lactococcus lactis subsp lactis* and/or *Lactococcus lactis subsp cremoris.*

In a particular embodiment, the strain of *Lactobacillus sakei* is used in combination with at least a starter culture. The skilled person in the art can readily select the appropriate cheese starter culture, depending on the type of fermented milk product to be produced.

Indeed, different types of cheese starter cultures are available. There are two basic types of starter cultures.

Mesophilic starters function at moderate temperatures and are used when curds will be warmed to a temperature not exceeding 39°C. The classic examples of cheeses made from such cultures are Cheddar and Gouda.

Thermophilic cultures, are employed when curds will be heated to a temperature as high as 52°C. Many Swiss and Italian cheeses use thermophilic cultures, as well as some other types of cheeses like Cheddar.

In a preferred embodiment the starter culture comprises lactic acid bacteria and preferably acidifying lactic acid bacteria as above defined and detailed.

In a preferred embodiment, the starter culture is the cheese starter culture Choozit™ Classic 111 FRO commercialized by Dupont-Danisco.

Therefore, the invention also relates to a bacterial composition comprising:
1. at least one strain of *Lactobacillus sakei,* as defined herein;
2. at least one other strain selected from the group consisting of:
   - a strain of *Staphylococcus,* such as a strain of *Staphylococcus vitulinus,* preferably the strain *Staphylococcus vitulinus* deposited at the CNCM by Danisco France SAS on 25th April 2007 under the number CNCM 1-3751, and
   - a strain of *Brevibacterium,* such as a strain of *Brevibacterium casei, Brevibacterium linens* or *Brevibacterium aurantiacum*; and
3. at least one acidifying lactic acid bacteria, or a starter culture as defined above.

The bacteria used in the present invention may be provided in the form of a bacterial suspension, before or after freezing, or in the form of bacterial concentrates. Said bacterial concentrates may be dry, dried, lyophilized or frozen.

Typically, the bacteria used in the present invention can be stored at room temperature, at a temperature of about 4°C, about -20°C, about -80°C or about -200°C.

They can be associated with various excipients.

As used herein, the term "milk" has its general meaning in the art. It can be a milk of animal origin and/or vegetal origin.

A milk of animal origin refers to the white liquid produced by the mammary glands of mammals. The milk according to the present invention can be milk of any mammal origin such as cow's milk, goat's milk, sheep's milk, camel's milk, buffalo's milk or a combination thereof.

A milk of vegetal origin is any fermentable substance of vegetal origin, for example coming from soja, rice or malt seeds.

The expression "milk" also encompasses any reconstituted and/or recombined milks, e.g. a milk obtained by adding water to skim milk powder or to whole milk powder or a milk obtained by mixing together any milk components.

As used herein, the expression "fermented milk products", also named cultured dairy foods, cultured dairy products, or cultured milk products, are i) either milk or a milk-based products that have been directly fermented with lactic acid bacteria such as *Lactobacillus, Lactococcus*, and *Leuconostoc* or ii) food products that have been produced with a process involving a step of milk fermentation with lactic acid bacteria such as *Lactobacillus, Lactococcus*, and *Leuconostoc,* and that have been subjected to further modifications such as a ripening step or that have been mixed with other food ingredients.

Some examples of "fermented milk products" are "fermented milks", cheeses, milk-based drinks, yogurts, drinking yogurts. Preferably "fermented milk products" are "fermented milks" or cheeses. Preferably "fermented milk products" are cheeses.

As used herein, the term "cheese" has its general meaning in the art. It refers to the fermented milk product produced by coagulation of the milk protein casein. Typically, the milk is acidified and addition of the enzyme rennet causes coagulation. The solids are separated and pressed into final form. Some cheeses have molds on the rind or throughout. Most cheeses melt at cooking temperature.

Hundreds of types of cheese are produced. Their styles, textures and flavors depend on the origin of the milk (including the animal's diet), whether they have been pasteurized, the butterfat content, the type of microorganisms that are used, the processing, and the ripening (aging).

Cheeses can be classified according to their moisture content (expressed in percentage of water by total weight of the cheese): a cheese can be hard with a moisture content below 39%, semi-hard with a moisture content from 39% to 45% or soft with a moisture content above 45% preferably from 45 to 55%, preferably from 45 to 50%.

In a preferred embodiment, the cheese according to the invention is not a soft cheese, i.e. it has a moisture level of less than 45% of water per weight, preferably less than 40, even more preferably less than 38, 35, 30, 29, 28, 27, 26, 25, 20, 19, 18, 17, 16, 15, 14, 13, 12, 11, or 10% of water per weight.

Cheeses can also be classified according to their manufacturing process, and in particular to the type of ripening step employed:

### - Smear-ripened cheeses

Smear-ripened cheeses are washed-rind cheeses, which means that, during their production, they are repeatedly wiped or brushed with solution of bacteria or fungi (most commonly *Brevibacterium, Debaryomyces* and/or *Geotrichum*). This process allows producing a firm, flavourful rind around the cheese with a stronger flavour as the cheese matures.

In some cases, older cheeses are smeared on young cheeses to transfer the microorganisms. Many, but not all, of these have a distinctive pinkish or orange colouring to the exterior of the cheese. However, due to the regular "washing" steps, particularly in the early stages of production, this process is quite labour intensive compared to other methods of cheese production, and is more difficult to standardise leading to variability in cheeses quality.

### - Foil-ripened cheeses

Other types of cheese are ripened using the foil-ripening technology. According to this type of ripening, the cheese is covered with a film, such as a foil film (e.g. a plastic foil, an aluminium foil...) and/or a wax, and placed at a temperature from 4°C to 25°C, preferably from 9°C to 17°C, preferably around 12°C, while it matures. This ripening process results in a cheese with no rind, having no or a limited growth of microorganisms on its surface and therefore a limited flavour in comparison to smear-ripened cheeses. The method according to this invention therefore allows solving this issue.

In one embodiment, the invention relates to a process for making a foil-ripened cheese comprising the steps of:
a) inoculating milk with at least one strain of *Lactobacillus sakei* and at least one strain of acidifying lactic acid bacteria.
b) fermenting for a period of time comprised between 2 and 24 hours at a temperature comprised between 28°C and 55°C
c) covering the fermented product obtained in step b) with a foil film
d) ripening for a period of time comprised between 2 weeks and 24 months at a temperature comprised between 4°C and 25°C.

Generally a foil-ripened semi-hard cheese is ripened as a rindless cheese, with the young cheese being in packaged in foil after brining and then being ripened at a temperature of 4-14° C, preferably 9-11°C.

For Emmental, swiss cheeses and other hard foil-ripened cheeses, there is initially a pre-ripening step which occurred in a cold room comprising a temperature from 10 to 15°C during 2-4 weeks, then in a warm room comprising a temperature from 15 to 25°C during minimum 2 weeks, and at the end in the cold room comprising a temperature from 10 to 15°C for several weeks/months.

When cheese is foil-ripened, little moisture is lost during the ripening, which is particularly economically advantageous. In addition, there is no or a limited amount of cutting losses when the foil-ripened cheeses are cut up into slices or bars as they have generally a rectangular shape.

The foil-ripened cheese is then coated, for example with thermoplastic films of Polymers of PE, PP, polyvinyl (PV): PV-OH or PVacetate. Permeable or non-permeable thermoplastic films can be used. Coating with a foodgrade wax can be used also.

In a preferred embodiment, the cheese according to the invention is therefore a foil-ripened cheese.

In another embodiment, the invention relates to a process for making a smear-ripened cheese comprising the steps of:
a) inoculating milk with at least one strain of *Lactobacillus sakei* and at least one strain of acidifying lactic acid bacteria.
b) fermenting for a period of time comprised between 2 and 24 hours at a temperature comprised between 28°C and 55°C
c) ripening for a period of time comprised between 2 weeks and 24 months at a temperature comprised between 4°C and 25°C.

The strain of *Lactobacillus sakei* is also useful for preserving fermented milk products against spoilage. Indeed, bacteria belonging to the *Lactobacillus sakei* specie have been shown to produce bacteriocins, which help inhibit the development of undesirable microorganisms such as *Listeria monocytogenes.*

In another aspect, the application discloses a fermented milk product, preferably a cheese, preferably a hard or semi-hard cheese, preferably a semi-hard cheese, even more preferably a semi-hard, foil-ripened cheese obtainable by the method as described above.

The application also discloses a fermented milk product, preferably a cheese, preferably a hard or semi-hard cheese, preferably a semi-hard cheese, even more preferably a semi-hard, foil-ripened cheese, comprising at least one strain of *Lactobacillus sakei.*

Examples of hard or semi-hard cheeses according to the invention are Tilsit, Danbo, Hohlenkase, Raclette, Munster, Tomme, Tommette, Ossau-Iraty, Manchego, Gouda, Edam semi-hard cheeses and Cheddar, Cantal, Cheshire, Emmental, Gruyère, Beaufort, Parmesan, Romano hard cheeses.

The invention relates to a hard or semi-hard cheese, even more preferably a semi-hard cheese, even more preferably a semi-hard foil-ripened cheese, comprising at least one strain of *Lactobacillus sakei* which is selected from the group consisting of:
- *Lactobacillus sakei* strain deposited at the CNCM by Danisco France SAS on 25th April 2007 under the number CNCM 1-3750;
- *Lactobacillus sakei* strain deposited at the CNCM by Rhodia Food SAS on 23rd May 2000 under the number CNCM 1-2479;
and mixtures thereof.

Preferably *Lactobacillus sakei* is *Lactobacillus sakei* strain deposited at the CNCM by Danisco France SAS on 25th April 2007 under the number CNCM 1-3750.

In a preferred embodiment, said hard or semi-hard cheese is selected from the group consisting of Tilsit, Danbo, Hohlenkase, Raclette, Munster, Tomme, Tommette, Ossau-Iraty, Manchego, Gouda, Edam semi-hard cheeses and Cheddar, Cantal, Cheshire, Emmental, Gruyère, Beaufort, Parmesan, Romano hard cheeses.

In a particular embodiment of a cheese as described herein (as obtained by the method of the invention or described as such), a cheese comprises or is obtained using, at least one strain of *Lactobacillus sakei,* and at least one strain of *Staphylococcus* such as *Staphylococcus vitulinus* and/or one strain of *Brevibacterium* such as *Brevibacterium casei, Brevibacterium linens* or/and *Brevibacterium aurantiacum.* In a particular embodiment, a cheese comprises or is obtained using, at least one strain of *Lactobacillus sakei,* at least one strain of *Staphylococcus* such as *Staphylococcus vitulinus* and/or one strain of *Brevibacterium* such as *Brevibacterium casei, Brevibacterium linens* or/and *Brevibacterium aurantiacum*, and at least one LAB, preferably at least one acidifying lactic acid bacteria, as described herein.

It is noteworthy that according to the teaching of the invention, said *Lactobacillus sakei* strain, and if present said at least one *Staphylococcus* strain and/or said at least one *Brevibacterium* strain, are inoculated in the milk, before fermentation and ripening, such that this/these strain(s) is/are found at least within the body or core of the cheese or exclusively within the body or core of the cheese, or in other words this/these strain(s) is/are not found at the surface of the cheese or are not found only at the surface of the cheese. In particular, this means that for smear-ripened cheeses, this/these strain(s) is/are found at least within the body or core of the smear-ripened cheese, or exclusively within the body or core of the smear-ripened cheese, so in other words this/these strain(s) is/are not found in the rind of this cheese or not only in the rind of this cheese.

Other features and advantages of the invention will emerge upon reading the following non-limiting examples.

### EXAMPLES

### Example 1

### 1.1 INTRODUCTION

Twelve combinations of strains were tested in association with Choozit™ Classic 111 FRO (in "VIP" Vat In Parallel model 200g Gouda type cheeses. The VIP system is an equipment for cheese making. It enables to run 12 vats of milk simultaneously and so to test 12 combinations (or blends) of strains at the same time. The VIP has been especially adapted to Gouda technology. Accurate, reproducible and measurable process results are obtained with the VIP. Those cheeses and two standard cheeses with only Choozit™ Classic 111 FRO were ripened in foiled conditions at 12°C during 6 weeks.
Choozit™ Classic 111 FRO is a starter culture comprising acidifying lactic acid bacteria. It comprises a mixture of several strains of *Lactococcus lactis subsp lactis and Lactococcus lactis subsp cremoris.*

To evaluate the aromatic potential of each combination in the VIP model cheeses, sensory analysis was performed by quantitative descriptive analysis.

### 1.2. EXPERIMENTAL CONDITIONS

### 1.2.1. Composition of the vats

Choozit™ Classic 111 FRO was used to inoculate the twelve cheeses vats, at 7 DCU for 100L. Two control cheeses with only Choozit™ Classic 111 FRO were produced: Vat 1 and Vat 2.

Two industrial and deposited *Lactobacillus sakei* strains (CNCM 1-3750 and CNCM I-2479) were studied either alone at an inoculation rate of 1.10E6 cfu/ml (Vat 3 and Vat 4 respectively) or in combination (Vat 8). They were also studied in association with a *Brevibacterium casei* strain (Vat 6 and Vat 7 respectively). This *Brevibacterium casei* was also tested alone in Vat 5.

Vat 10 was inoculated with a mixture of a *Staphyloccus vitulinus* strain (*Staphyloccus vitulinus* CNCM I-3751), a *Lactobacillus paracasei* strain, a *Lactobacillus acidophilus* strain (*Lactobacillus acidophilus* CNCM 1-3784) and *Lactobacillus sakei* CNCM I-3750.

The Vat 11 was inoculated with a mixture of a *Staphyloccus vitulinus* strain (*Staphyloccus vitulinus* CNCM 1-3751) and *Lactobacillus sakei* CNCM 1-3750. Finally, in the Vat 12, a mixture of a *Lactobacillus paracasei* strain and a *Lactobacillus acidophilus* strain (*Lactobacillus acidophilus* CNCM I-3784), was added.

### 1.2.2. Cheese production and ripening conditions

Gouda cheeses were produced using the VIP equipment. This last one allows to make twelve 200g cheeses using 2L vats placed in parallel.
Blends were tested in association with an acidifying culture, Choozit™ Classic 111 FRO.
Choozit™ Classic 111 FRO was added to production milk at nominal inoculation rate; and blends were inoculated according to formulation target (with semi-finished products). Two control cheeses were manufactured without added blend. After manufacturing, cheeses were wrapped in foil, and kept at +12°C during 6 weeks.
Combinations of strains used to inoculate the cheese vats are summarized in Table 1.

**Table 1: Combinations of strains used to inoculate the cheese vats**

| | Vat 1 | Vat 2 | Vat 3 | Vat 4 | Vat 5 | Vat 6 | Vat 7 | Vat 8 | Vat 9 | Vat 10 | Vat 11 | Vat 12 |
|---|---|---|---|---|---|---|---|---|---|---|---|---|
| Species | cfu/mL | | | | | | | | | | | |
| *Staphylococcus vitulinus* CNCM I-3751 | | | | | | | | | | 1E+06 | 1E+06 | |
| *Lactobacillus paracasei* | | | | | | | | | | 1E+06 | | IE+06 |
| *Lactobacillus acidophilus* CNCM I-3784 | | | | | | | | | | 1E+06 | | IE+06 |
| *Lactobacillus sakei* CNCM I-3750 | | | 1E+06 | | | 1E+06 | | 1E+06 | 1E+06 | 1E+06 | 1E+06 | |
| *Brevibacterium casei* | | | | | 1E+06 | 1E+06 | 1E+06 | | 1E+06 | | | |
| *Lactobacillus sakei* CNCM I-2479 | | | | IE+06 | | | IE+06 | 1E+06 | 1E+06 | | | |
| Choozit™ Classic 111 FRO at 7 DCU for 100L | X | X | X | X | X | X | X | X | X | X | X | X |

### 1.3. SENSORY ANALYSIS METHOD

The tasting session was organized with 10 well-trained assessors.

They assessed the intensity of 23 descriptors of appearance, texture and flavour using a seven points' scale. The samples were homogenous (same quantity, same presentation) and were coded with randomly selected 3 digit numbers. The statistical treatment of the data was done by one-way Analysis of Variance (ANOVA), which allows the assessment of significant differences (with α=5%) between the products for each descriptor.

### 1.4. RESULTS

It has been verified that the two standard cheeses Vat 1 and Vat 2 organoleptic profiles are similar, with no significant difference (from ANOVA) for all the 23 descriptors.

The main significant difference between all those VIP cheeses was observable for Sulphur egg note, as described in Table 2 below.

The last column of the Table represents the groups (A, AB, ABC, BC and C) that were identified by one-way ANOVA mean comparison Newman-Keuls test. This statistical test enables to sort products having similar characteristic (i.e. no significant difference). The C group is composed by VI, V2, V5 and V12 and is the group which presents the least sulphur egg aroma scores. This group contains control VIP cheeses and cheeses with no *Lactobacillus sakei* strain. The A and AB groups are the ones with the most intense sulphur egg aroma. Those groups include cheeses inoculated with the *Lactobacillus sakei* CNCM I-3750 strain alone or in association. Finally, the ABC and BC groups are intermediate groups, which contain *Lactobacillus sakei* CNCM 1-2479 strain.

It is clearly shown that the species *Lactobacillus sakei* plays a major role in the development of the sulphur aroma, particularly the sulphur egg aroma. Some variation in intensity can be also noticed between the two *Lactobacillus sakei* strains. *Lactobacillus sakei* CNCM 1-3750 strain tends to produce more sulphur egg aroma than *Lactobacillus sakei* CNCM 1-2479.

**Table 2: Sulphur Egg aroma developed by different strain mixtures**

| **Vat number** | **Strain combination** | **Sulphur Egg Aroma (mean of 10 assessors)** | **ANOVA Groups** |
|---|---|---|---|
| Vat 5 | *Brevibacterium casei* | 0.4 | C |
| Vat 2 | control | 0.5 | C |
| Vat 1 | control | 0.5 | C |
| Vat 12 | *Lactobacillus paracasei* + *Lactobacillus acidophilus* CNCM I-3784 | 0.6 | C |
| Vat 7 | *Lactobacillus sakei* CNCM I-2479+ *Brevibacterium casei* | 1.1 | BC |
| Vat 4 | *Lactobacillus sakei* CNCM I-2479 | 1.9 | ABC |
| Vat 8 | *Lactobacillus sakei* CNCM I-3750+ *Lactobacillus sakei* CNCM I-2479 | 2.3 | AB |
| Vat 6 | *Lactobacillus sakei* CNCM I-3750+ *Brevibacterium casei* | 2.6 | A |
| Vat 9 | *Lactobacillus sakei* CNCM I-3750+ *Lactobacillus sakei* CNCM I-2479+ *Brevibacterium casei* | 2.6 | A |
| Vat 10 | Lactobacillus sakei CNCM I-3750+ *Staphylococcus vitulinus* CNCM I-3751 + *Lactobacillus paracasei* + *Lactobacillus acidophilus* CNCM I-3784 | 2.7 | A |
| Vat 3 | *Lactobacillus sakei* CNCM I-3750 | 3.0 | A |
| Vat 11 | *Lactobacillus sakei* CNCM I-3750+ *Staphylococcus vitulinus* CNCM I-3751 | 3.2 | A |

### Example 2

### 2.1. COMPOSITION OF THE CHEESES

Two Gouda cheeses were produced using the VIP equipment.
Choozit™ Classic 111 FRO was used to inoculate the two cheeses VIP vats, at 7 DCU for 100L. The control cheeses containing only Choozit™ Classic 111 FRO was produced in vat 21.
Deposited *Lactobacillus sakei* strain CNCM 1-3750 and *Staphylococcus vitulinus* CNCM I-2479 were studied at an inoculation rate of 1.10E6 cfu/ml in combination in vat 22.
After manufacturing, both cheeses were wrapped in foil, and kept 2 weeks at +12°C, then 2 weeks at +9°C, and finally 3 weeks at +12°C (total of 7 weeks).

### 2.2. SENSORY ANALYSIS METHOD

The tasting session was organized with 12 well-trained assessors.

They assessed the intensity of 23 descriptors of appearance, texture and flavour using a seven points' scale. The samples were homogenous (same quantity, same presentation) and were coded with randomly selected 3 digit numbers. The statistical treatment of the data was done by one-way Analysis of Variance (ANOVA), which allows the assessment of significant differences (with α =5%) between the products for each descriptor.

### 2.3. CHROMATOGRAPHY ANALYSIS METHOD

The sulphur volatile compounds e.g. hydrogen sulphide, methanethiol and dimethylsulphide were determined by a Gas Chromatography coupled with a Mass Spectrometer detector.

The SPME (Solid Phase Micro-Extraction) technique was used to extract the sulphur compounds from the cheeses. The volatile compounds were then injected in the Gas Chromatography, separated in a capillary column, and were detected by the Mass Spectrometer. The method was calibrated for each of the three compounds.

### 2.4. RESULTS

A significant difference between the two VIP cheeses was observable for Sulphur egg note. Thus, the Vat 22 had significantly more Sulphur Egg aroma than the Control Vat 21.

| **Vat number** | **Strain combination** | **Sulphur Egg Aroma (mean of 12 assessors)** | **ANOVA Groups** |
|---|---|---|---|
| Vat 21 | Control | 0.75 | B |
| Vat 22 | *Lactobacillus sakei* CNCM I-3750+ *Staphylococcus vitulinus* CNCM I-3751 | 1.92 | A |

The Vat 22 had also quantitatively more sulphur volatile compounds than the Control Vat 21: The hydrogen sulfide content was higher in Vat 22 (16.9-fold increase), so as for the methanethiol and dimethylsulfide, as compared to Vat 21.

| **Vat number** | **Strain combination** | **hydrogen sulfide (µg/kg)** | **methanethiol (µg/kg)** | **Dimethylsulfide (µg/kg)** |
|---|---|---|---|---|
| Vat 21 | Control | 6.3 | 5.7 | 3.7 |
| Vat 22 | *Lactobacillus sakei* CNCM I-3750 *+ Staphylococcus vitulinus* CNCM I-3751 | 107.0 | 8.3 | 6.7 |

### Example 3

### 3.1. COMPOSITION OF THE CHEESES

Two, semi-hard, Tilsit type, cheeses were produced.

One control cheese named 31 was produced with a mesophilic acidifying starter (different from the Choozit™ Classic 111 FRO). A trial cheese named 32 with the same acidifying starter added with both deposited *Lactobacillus sakei* strain CNCM 1-3750 and *Staphylococcus vitulinus* CNCM 1-2479 (each at an inoculation rate of 5.10E6 cfu/ml) was produced. After manufacturing, both cheeses were wrapped in foil, and kept 3 months at +12°C.

### 3.2. SENSORY ANALYSIS METHOD

The tasting session was organized with 14 well-trained assessors.

They assessed the intensity of 23 descriptors of appearance, texture and flavour using a seven points' scale. The samples were homogenous (same quantity, same presentation) and were coded with randomly selected 3 digit numbers. The statistical treatment of the data was done by one-way Analysis of Variance (ANOVA), which allows the assessment of significant differences (with α =5%) between the products for each descriptor.

### 3.3. CHROMATOGRAPHY ANALYSIS METHOD

The sulphur volatile compounds e.g. hydrogen sulphide, methanethiol and dimethylsulphide were determined by a Gas Chromatography coupled with a Mass Spectrometer detector.

The SPME (Solid Phase Micro-Extraction) technique was used to extract the sulphur compounds from the cheeses. The volatile compounds were then injected in the Gas Chromatography, separated in a capillary column, and were detected by the Mass Spectrometer. The method was calibrated for each of the three compounds.

### 3.4. RESULTS

A significant difference between the two Tilsit type cheeses was observable for Sulphur egg note. The control cheese 31 had significantly less Sulphur Egg aroma than the trial cheese 32 with the combination of strains.

| **Product names** | **Strain combination** | **Sulphur Egg Aroma (mean of 14 assessors)** | **ANOVA Groups** |
|---|---|---|---|
| Control cheese 31 | Control | 0.76 | B |
| Trial Cheese 32 | *Lactobacillus sakei* CNCMI-3750 + *Staphylococcus vitulinus* CNCM I-3751 | 2.32 | A |

The trial cheese 32 had quantitatively more sulphur volatile compounds than the control cheese 31. The hydrogen sulfide content was higher in trial cheese 32 (3.9-fold increase), so as for the methanethiol and dimethylsulfide, as compared to cheese 31

| **Vat number** | **Strain combination** | **hydrogen sulfide (µg/kg)** | **methanethiol (µg/kg)** | **Dimethylsulfide (µg/kg)** |
|---|---|---|---|---|
| Control cheese 31 | Control | 75.5 | 6.2 | 2.8 |
| Trial Cheese 32 | *Lactobacillus sakei* CNCM I-3750 + *Staphylococcus vitulinus* CNCM I-3751 | 300.0 | 10.0 | 3.5 |

### Example 4

### 4.1. COMPOSITION OF THE CHEESES

Two hard Cheddar type cheeses are produced. One control cheese named 41 is produced with a combination of mesophilic starer and a thermophilic starter. A trial cheese named 42 with the same acidifying starter added with both deposited *Lactobacillus sakei* strain CNCM 1-3750 and *Staphylococcus vitulinus* CNCM 1-2479 (each at an inoculation rate of 5.10E6 cfu/ml) is produced. After manufacturing, both cheeses are wrapped in foil, and kept 3 months at +12°C.

### 4.2. SENSORY ANALYSIS METHOD

The tasting session is organized with well-trained assessors. They assess the intensity of 20 descriptors for the Cheddar cheese sensory evaluation, texture and flavour, using a seven points' scale. The samples are homogenous (same quantity, same presentation) and are coded with randomly selected 3 digit numbers. The statistical treatment of the data is done by one-way Analysis of Variance (ANOVA), which allows the assessment of significant differences (with α =5%) between the products for each descriptor.

### 4.3. CHROMATOGRAPHY ANALYSIS METHOD

The sulphur volatile compounds e.g. hydrogen sulphide, methanethiol and dimethylsulphide are determined by a Gas Chromatography coupled with a Mass Spectrometer detector. The SPME (Solid Phase Micro-Extraction) technique is used to extract the sulphur compounds from the cheeses. The volatile compounds are then injected in the Gas Chromatography, separated in a capillary column, and are detected by the Mass Spectrometer. The method is calibrated for each of the three compounds.

### Example 5

### 5.1. COMPOSITION OF THE CHEESES

Two Munster (smear-ripened) cheeses are produced. One control cheese named 51 is produced with a mesophilic acidifying starter. A trial cheese named 52 with the same acidifying starter added with both deposited *Lactobacillus sakei* strain CNCM 1-3750 and *Staphylococcus vitulinus* CNCM 1-2479 (each at an inoculation rate of 5.10E6 cfu/ml) is produced. After manufacturing, both cheeses are kept 2 weeks at +12°C minimum.

### 5.2. SENSORY ANALYSIS METHOD

The tasting session is organized with well-trained assessors. They assess the intensity of 23 descriptors of appearance, texture and flavour using a seven points' scale. The samples are homogenous (same quantity, same presentation) and are coded with randomly selected 3 digit numbers. The statistical treatment of the data is done by one-way Analysis of Variance (ANOVA), which allows the assessment of significant differences (with α =5%) between the products for each descriptor.

### 5.3. CHROMATOGRAPHY ANALYSIS METHOD

The sulphur volatile compounds e.g. hydrogen sulphide, methanethiol and dimethylsulphide are determined by a Gas Chromatography coupled with a Mass Spectrometer detector. The SPME (Solid Phase Micro-Extraction) technique is used to extract the sulphur compounds from the cheeses. The volatile compounds are then injected in the Gas Chromatography, separated in a capillary column, and are detected by the Mass Spectrometer. The method is calibrated for each of the three compounds.

## Claims

1. Use of at least one strain of *Lactobacillus sakei* for developing sulphur aroma, preferably sulphur egg aroma, in hard or semi-hard cheese, wherein said at least one strain of *Lactobacillus sakei* is inoculated into milk in combination with at least one strain of acidifying lactic acid bacterium.

2. Use according to claim 1, wherein the concentration of hydrogen sulphide produced in said cheese is increased of a factor of at least 3, compared to similar cheese obtained in the same conditions in the absence of *Lactobacillus sakei.*

3. Method for making a hard or semi-hard cheese having a sulphur aroma, preferably a sulphur egg aroma, comprising the step of inoculating milk with at least one strain of *Lactobacillus sakei* in combination with at least one strain of acidifying lactic acid bacterium, wherein said at least one strain of *Lactobacillus sakei* is inoculated as a dry, dried, lyophilized or frozen concentrates.

4. Use or method according to any of the above claims, wherein said cheese is a semi-hard cheese, preferably a semi-hard, foil-ripened cheese.

5. Use or method according to any of the above claims, wherein said cheese has a moisture level of less than 45% of water per weight.

6. Use or method according to any of the above claims, wherein the strain of *Lactobacillus sakei* is selected from the group consisting of:
- *Lactobacillus sakei* strain deposited at the CNCM by Danisco France SAS on 25th April 2007 under the number CNCM 1-3750;
- *Lactobacillus sakei* strain deposited at the CNCM by Rhodia Food SAS on 23rd May 2000 under the number CNCM 1-2479; and mixtures thereof.

7. Use or method according to any of the above claims, wherein said strain of *Lactobacillus sakei* is used in combination with one or several other microorganism(s).

8. Use or method according to any of the above claims, wherein said other microorganism(s) comprise(s) a strain of *Staphylococcus,* such as a strain of *Staphylococcus vitulinus* and/or a strain of *Brevibacterium,* such as a strain *Brevibacterium casei, Brevibacterium linens* or *Brevibacterium aurantiacum.*

9. Use or method according to any of the above claims, wherein said acidifying lactic bacterium is a strain belonging to the specie *Lactococcus lactis,* preferably *Lactococcus lactis subsp lactis* and/or *Lactococcus lactis subsp cremoris.*

10. Use or method according to any of the above claims, wherein strain of *Lactobacillus sakei* is used in combination with a starter culture, preferably a mesophilic starter culture, more preferably the Choozit™ Classic 111 FRO starter culture.

11. Bacterial composition comprising at least one strain of *Lactobacillus sakei* and at least one other strain selected from the group consisting of:
- a strain of *Staphylococcus vitulinus,* preferably the strain *Staphylococcus vitulinus* deposited at the CNCM by Danisco France SAS on 25th April 2007 under the number CNCM 1-3751,
- a strain of *Brevibacterium,* such as a strain *Brevibacterium casei, Brevibacterium linens* or *Brevibacterium aurantiacum.*

12. Bacterial composition according to claim 11, which is in the form of a dry, dried, lyophilized or frozen concentrates.

13. Hard or semi-hard cheese, preferably a semi-hard, foil-ripened cheese, obtainable by the method as described above, wherein said cheese comprises at least one of *Lactobacillus sakei* selected from the group consisting of:
- *Lactobacillus sakei* strain deposited at the CNCM by Danisco France SAS on 25th April 2007 under the number CNCM 1-3750;
- *Lactobacillus sakei* strain deposited at the CNCM by Rhodia Food SAS on 23rd May 2000 under the number CNCM 1-2479; and mixtures thereof.

14. Hard or semi-hard cheese, preferably a semi-hard, foil-ripened cheese, comprising at least one strain of *Lactobacillus sakei* and at least one strain of *Staphylococcus vitulinus.*

15. Hard or semi-hard cheese according to claim 14 wherein *Lactobacillus sakei* is selected from the group consisting of:
- *Lactobacillus sakei* strain deposited at the CNCM by Danisco France SAS on 25th April 2007 under the number CNCM 1-3750;
- *Lactobacillus sakei* strain deposited at the CNCM by Rhodia Food SAS on 23rd May 2000 under the number CNCM 1-2479;
and mixtures thereof.

## Patentansprüche

1. Verwendung wenigstens eines Stamms von *Lactobacillus sakei* für die Entwicklung von Schwefelaroma, vorzugsweise Schwefel-Ei-Aroma, in hartem oder halbhartem Käse, wobei der wenigstens eine Stamm von *Lactobacillus sakei* in Kombination mit wenigstens einem Stamm eines säuernden Milchsäurebakteriums in Milch inokuliert wird.

2. Verwendung gemäß Anspruch 1, wobei die Konzentration von Schwefelwasserstoff, der in dem Käse erzeugt wird, im Vergleich zu einem ähnlichen Käse, der unter den gleichen Bedingungen ohne Vorhandensein von *Lactobacillus sakei* erhalten wird, um einen Faktor von wenigstens 3 erhöht ist.

3. Verfahren zur Herstellung von hartem oder halbhartem Käse mit einem Schwefelaroma, vorzugsweise einem Schwefel-Ei-Aroma, umfassend den Schritt des Inokulierens von Milch mit wenigstens einem Stamm von *Lactobacillus sakei* in Kombination mit wenigstens einem Stamm eines säuernden Milchsäurebakteriums, wobei der wenigstens eine Stamm von *Lactobacillus sakei* als trockenes, getrocknetes, lyophilisertes oder gefrorenes Konzentrat inokuliert wird.

4. Verwendung oder Verfahren gemäß einem der vorstehenden Ansprüche, wobei der Käse ein halbharter Käse ist, vorzugsweise ein halbharter foliengereifter Käse.

5. Verwendung oder Verfahren gemäß einem der vorstehenden Ansprüche, wobei der Käse einen Feuchtegehalt von weniger als 45 Gew.-% Wasser aufweist.

6. Verwendung oder Verfahren gemäß einem der vorstehenden Ansprüche, wobei der Stamm von *Lactobacillus sakei* ausgewählt ist aus der Gruppe bestehend aus:
- *Lactobacillus-sakei*-Stamm, am 25. April 2007 von Danisco France SAS unter der Nummer CNCM 1-3750 bei der CNCM hinterlegt;
- *Lactobacillus-sakei*-Stamm, am 23. Mai 2000 von Rhodia Food SAS unter der Nummer CNCM I-2479 bei der CNCM hinterlegt; und Gemischen davon.

7. Verwendung oder Verfahren gemäß einem der vorstehenden Ansprüche, wobei der Stamm von *Lactobacillus sakei* in Kombination mit einem oder mehrere anderen Mikroorganismen verwendet wird.

8. Verwendung oder Verfahren gemäß einem der vorstehenden Ansprüche, wobei der andere Mikroorganismus/die anderen Mikroorganismen einen Stamm von *Staphylococcus,* wie z. B. einen Stamm von *Staphylococcus vitulinus* und/oder einen Stamm von *Brevibacterium,* wie z. B. *Brevibacterium casei, Brevibacterium linens* oder *Brevibacterium aurantiacum,* umfasst/umfassen.

9. Verwendung oder Verfahren gemäß einem der vorstehenden Ansprüche, wobei das säuernde Milchsäurebakterium ein Stamm ist, der zu der Spezies *Lactococcus latcis* gehört, vorzugsweise *Lactococcus latcis subsp. lactis* und/oder *Lactococcus latcis subsp. cremoris.*

10. Verwendung oder Verfahren gemäß einem der vorstehenden Ansprüche, wobei der Stamm von *Lactobacillus sakei* in Kombination mit einer Starterkultur verwendet wird, vorzugsweise einer mesophilen Starterkultur, bevorzugter der Starterkultur Choozit™ Classic 111 FRO.

11. Bakterienzusammensetzung, umfassend wenigstens einen Stamm von *Lactobacillus sakei* und wenigstens einen weiteren Stamm ausgewählt aus der Gruppe bestehend aus:
- einem Stamm von *Staphylococcus vitulinus,* vorzugsweise dem *Staphylococcus-vitulinus*-Stamm, der am 25. April 2007 von Danisco France SAS unter der Nummer CNCM 1-3751 bei der CNCM hinterlegt wurde;
- einem Stamm von *Brevibacterium,* wie z. B. einem Stamm von *Brevibacterium casei, Brevibacterium linens* oder *Brevibacterium aurantiacum.*

12. Bakterienzusammensetzung gemäß Anspruch 11, die in der Form eines trockenen, getrockneten, lyophiliserten oder gefrorenen Konzentrats vorliegt.

13. Harter oder halbharter Käse, vorzugsweise ein halbharter foliengereifter Käse, erhältlich durch das vorstehend beschriebene Verfahren, wobei der Käse wenigstens eines von einem *Lactobacillus sakei* ausgewählt aus der Gruppe bestehend aus:
- *Lactobacillus-sakei*-Stamm, am 25. April 2007 von Danisco France SAS unter der Nummer CNCM 1-3750 bei der CNCM hinterlegt;
- *Lactobacillus-sakei*-Stamm, am 23. Mai 2000 von Rhodia Food SAS unter der Nummer CNCM I-2479 bei der CNCM hinterlegt; und Gemischen davon;
umfasst.

14. Harter oder halbharter Käse, vorzugsweise ein halbharter foliengereifter Käse, umfassend wenigstens einen Stamm von *Lactobacillus sakei* und wenigstens einen Stamm von *Staphylococcus vitulinus.*

15. Harter oder halbharter Käse gemäß Anspruch 14, wobei *Lactobacillus sakei* ausgewählt ist aus der Gruppe bestehend aus:
- *Lactobacillus-sakei*-Stamm, am 25. April 2007 von Danisco France SAS unter der Nummer CNCM 1-3750 bei der CNCM hinterlegt;
- *Lactobacillus-sakei*-Stamm, am 23. Mai 2000 von Rhodia Food SAS unter der Nummer CNCM I-2479 bei der CNCM hinterlegt;
und Gemischen davon.

## Revendications

1. Utilisation d'au moins une souche de *Lactobacillus sakei* pour le développement d'un arôme de soufre, préférablement un arôme d'oeuf soufré, dans un fromage à pâte dure ou semi-dure, dans laquelle ladite au moins une souche de *Lactobacillus sakei* est inoculée dans du lait en combinaison avec au moins une souche de bactérie lactique acidifiante.

2. Utilisation selon la revendication 1, dans laquelle la concentration en sulfure d'hydrogène produit dans ledit fromage est augmentée d'un facteur d'au moins 3, par rapport à un fromage similaire obtenu dans les mêmes conditions en l'absence de *Lactobacillus sakei.*

3. Méthode de fabrication d'un fromage à pâte dure ou semi-dure ayant un arôme de soufre, préférablement un arôme d'oeuf soufré, comprenant l'étape consistant à inoculer du lait avec au moins une souche de *Lactobacillus sakei* en combinaison avec au moins une souche de bactérie lactique acidifiante, où ladite au moins une souche de *Lactobacillus sakei* est inoculée sous forme de concentré sec, séché, lyophilisé, ou congelé.

4. Utilisation ou méthode selon l'une quelconque des revendications précédentes, dans laquelle ledit fromage est un fromage à pâte semi-dure, préférablement un fromage à pâte semi-dure affiné en papier.

5. Utilisation ou méthode selon l'une quelconque des revendications précédentes, dans laquelle ledit fromage possède un taux d'humidité inférieur à 45% d'eau en poids.

6. Utilisation ou méthode selon l'une quelconque des revendications précédentes, dans laquelle la souche de *Lactobacillus sakei* est choisie dans le groupe constitué par
- la souche de *Lactobacillus sakei* déposée auprès du CNCM par Danisco France SAS le 25 avril 2007 sous le numéro CNCM 1-3750 ;
- la souche de *Lactobacillus sakei* déposée auprès du CNCM par Rhodia Food SAS le 23 mai 2000 sous le numéro CNCM 1-2479 ; et des mélanges de celles-ci.

7. Utilisation ou méthode selon l'une quelconque des revendications précédentes, dans laquelle ladite souche de *Lactobacillus sakei* est utilisée en combinaison avec un ou plusieurs autres microorganismes.

8. Utilisation ou méthode selon l'une quelconque des revendications précédentes, dans laquelle lesdits un ou plusieurs autres microorganismes comprennent une souche de *Staphylococcus,* telle qu'une souche de *Staphylococcus vitulinus* et/ou une souche de *Brevibacterium,* telle qu'une souche de *Brevibacterium casei, Brevibacterium linens* ou *Brevibacterium aurantiacum.*

9. Utilisation ou méthode selon l'une quelconque des revendications précédentes, dans laquelle ladite bactérie lactique acidifiante est une souche appartenant à l'espèce *Lactococcus lactis,* préférablement *Lactococcus lactis subsp. lactis* et/ou *Lactococcus lactis subsp. cremoris.*

10. Utilisation ou méthode selon l'une quelconque des revendications précédentes, dans laquelle la souche de *Lactobacillus sakei* est utilisée en combinaison avec une culture starter, préférablement une culture starter mésophile, plus préférablement la culture starter Choozit™ Classic 111 FRO.

11. Composition bactérienne comprenant au moins une souche de *Lactobacillus sakei* et au moins une autre souche choisie dans le groupe constitué par :
- une souche de *Staphylococcus vitulinus,* préférablement la souche de *Staphylococcus vitulinus* déposée auprès du CNCM par Danisco France SAS le 25 avril 2007 sous le numéro CNCM 1-3751 ;
- une souche de *Brevibacterium,* telle qu'une souche de *Brevibacterium casei, Brevibacterium linens* ou *Brevibacterium aurantiacum.*

12. Composition bactérienne selon la revendication 11, qui se trouve sous la forme d'un concentrés sec, séché, lyophilisé ou congelé.

13. Fromage à pâte dure ou semi-dure, préférablement un fromage à pâte semi-dure affiné en papier, pouvant être obtenu par la méthode telle que décrite ci-dessus, où ledit fromage comprend au moins l'une parmi les souches de *Lactobacillus sakei* choisies dans le groupe constitué par
- la souche de *Lactobacillus sakei* déposée auprès du CNCM par Danisco France SAS le 25 avril 2007 sous le numéro CNCM 1-3750 ;
- la souche de *Lactobacillus sakei* déposée auprès du CNCM par Rhodia Food SAS le 23 mai 2000 sous le numéro CNCM 1-2479 ; et des mélanges de celles-ci.

14. Fromage à pâte dure ou semi-dure, préférablement un fromage à pâte semi-dure affiné en papier, comprenant au moins une souche de *Lactobacillus sakei* et au moins une souche de *Staphylococcus vitulinus.*

15. Fromage à pâte dure ou semi-dure selon la revendication 14, dans lequel *Lactobacillus sakei* est choisie dans le groupe constitué par
- la souche de *Lactobacillus sakei* déposée auprès du CNCM par Danisco France SAS le 25 avril 2007 sous le numéro CNCM 1-3750 ;
- la souche de *Lactobacillus sakei* déposée auprès du CNCM par Rhodia Food SAS le 23 mai 2000 sous le numéro CNCM 1-2479 ;
et des mélanges de celles-ci.
